# EUROPÄISCHE PATENTANMELDUNG

(11) **EP 1 715 328 A1**
(43) Veröffentlichungstag der Anmeldung: **25.10.2006**
(21) Anmeldenummer: 06007924.1
(22) Anmeldetag: 15.04.2006
(51) Int. Cl.: G01N 21/90, B07C 5/12

(54) **Inspektionsvorichtung zur Inspektion von verschlossenen Behältern**

(30) Priorität: 18.04.2005 DE 102005017957
(71) Anmelder: KHS AG, 44143 Dortmund (DE)
(72) Erfinder: Weisgerber, Martin, 52222 Stolberg (DE); Buchwald, Carsten, 53498 Bad Breisig (DE); Pohl, Ralph, 56598 Rheinbrohl (DE); Schorn, Wolfgang, 53506 Hönningen (DE)

(57) **Zusammenfassung**

Vorgestellt wird eine Inspektionsvorrichtung für die Inspektion von verschlossenen Behältern (1) wie Flaschen, Gläsern oder dergleichen, ausgebildet in Linear- oder Rundläuferbauweise, mit mindestens einer Kamera, mindestens einer Beleuchtungsvorrichtung und mindestens einem System zur Bildverarbeitung, mit einer Einhausung (14), welche zumindest einen Teil der Behältertransportstrecke, die mindestens eine Beleuchtungsvorrichtung, die mindestens eine Kamera umschließt, dabei ist vorgesehen, dass die Innenflächen der Einhausung hell ausgebildet sind. Vorteilhafterweise sind die Innenflächen der Einhausung (4) matt ausgebildet, oder derart ausgebildet dass das Licht diffus reflektiert wird. Innerhalb der Einhausung (4) bzw. auf der Oberfläche der zu untersuchenden Behälters (1) kann eine homogene Leuchtdichte erreicht werden.

## Beschreibung

Die vorliegende Erfindung betrifft eine Inspektionsvorrichtung gemäß dem Oberbegriff des Anspruches 1. Vorteilhafte Weiterbildungen sind in den Unteransprüchen angegeben.

Es ist üblich, Getränke wie z.B. Bier, Fruchtsäfte, Mineralwasser oder aber auch Softdrinkgetränke in großem Maßstab, also industriell herzustellen. Um dem Verbraucher ein stets gleichbleibendes und gutes Produkt anbieten zu können, hat es sich als besonders vorteilhaft herausgestellt, nicht nur während des eigentlichen Produktionsprozesses zahlreiche Kontrollen durchzuführen, sondern auch das fertige Endprodukt einer Endkontrolle zu unterziehen.
Gleiches gilt analog auch für andere in Gläser oder Flaschen abgefüllte Produkte, wie z.B. Öle, Saucen usw. so dass die der Anwendungsbereich der vorliegenden Erfindung auch auf die Verarbeitung derartiger Produkte erstreckt, auch wenn diese nachfolgend nicht ausdrücklich erwähnt werden. Ebenfalls erstreckt sich der Schutzumfang sowohl auf Inspektionsmaschinen in Linear-, als auch in Rundläuferbauweise.

Unter dem obigen Begriff "Endprodukt" ist der fertige, mit Füllgut gefüllte, verschlossene und etikettierte Behälter 1 zu verstehen.
Im Rahmen einer solchen Endkontrolle können u.a. die Füllhöhe, der richtige Sitz der Etiketten, die Oberflächenbeschriftung oder Oberflächenqualität des Endproduktes Gegenstand der Untersuchung sein. Um diese Inspektionsaufgaben wahrnehmen zu können, wurden in der Vergangenheit zahlreiche Lösungen vorgestellt, wobei es sich häufig um so genannte Linearmaschinen handelt, da diese aufgrund ihrer konstruktiven Gestaltung das Endprodukt besonders schonend behandeln und insbesondere die Etikettenausstattung nicht beschädigen.

Derartige Inspektionsmaschinen, aber auch solche in Rundläuferbauweise, zeigen im Wesentlichen den folgenden Aufbau: Die Behälter werden aufrecht stehend auf einem Transportförderer, z.B. einer Transportkette, transportiert. Zur Inspektion der Behälter ist eine Inspektionsstation ausgebildet, welche einen Teil der Transportstrecke bildet bzw. einen Teil der Transportstrecke umschließt. Dazu ist es bekannt, eine Einhausung auszubilden, welche als Bestandteil der Inspektionsstation die Transportstrecke im Inspektionsbereich möglichst vollständig und lichtdicht umschließt, so dass in der Regel lediglich der Behälterein- und -auslauf nicht durch die Wand der Einhausung 14 verschlossen sind.

Die Einhausung 14, bzw. die Inspektionsmaschine umfasst in der Regel mindestens eine Kamera 15, mindestens eine Beleuchtungseinrichtung 16 und ein System zur Verarbeitung und Auswertung der aufgenommenen Bildinformationen.

Anhand der ausgewerteten Bildinformationen und einem Vergleich mit den im Auswertsystem gespeicherte Soll-Werten können durch einen oder mehrere Soll-Ist-Vergleiche fehlerhafte, das heißt die Anforderungen nicht erfüllende Behälter ermittelt und vom weiteren Produktionsprozess, insbesondere vom Einpacken der Behälter 1 in eine Transportsammelverpackung ausgeschlossen werden.

Allen bekannten Ausgestaltungen von Inspektionsmaschinen zur optischen Inspektion ist gemeinsam, dass die Innenwände der Einhausung schwarz ausgebildet bzw. gefärbt sind. Durch diese Vorgehensweise soll erreicht werden, dass Licht, welches von den Flächen des untersuchten Behälters 1 reflektiert wird von den umgebenden, schwarzen Flächen möglichst vollständig geschluckt wird und somit bei der Aufnahme bzw. bei deren Auswertung nicht durch weitere Reflektionen auf der Behälteroberfläche zu zusätzlichen Fehlern und/oder Schwierigkeiten führt.

Ebenfalls soll durch die schwarze Ausbildung der Innenwände der Einhausung 14 verhindert werden, dass Streulicht, welches z.B. durch den Behälterein- und/oder -auslauf 19 in die Einhausung 14 gelangt, zu Störungen führt. Auch dieses Streulicht soll durch die Innenwände der Einhausung möglichst vollständig absorbiert werden.

Als wesentlicher Nachteil der bekannten Ausgestaltungen hat sich herausgestellt, dass bei dieser Vorgehensweise innerhalb der Einhausung bzw. auf der Oberfläche des zu untersuchenden Behälters keine homogene Leuchtdichte erreicht werden kann. Dieses hat zur Folge, dass die Behälteroberfläche unterschiedliche Helligkeitswerte aufweist. Da diese unterschiedlichen Helligkeitswerte allein von der Beleuchtungsart und/oder der geometrischen "Normalkontur" des untersuchten Behälters hervorgerufen werden, erschweren diese die Analyse und Interpretation der Aufnahmen, da auch die zu findenden und zu untersuchenden Merkmale wie z.B. Etiketten(kanten), Behälterverschlüsse oder Oberflächenfehler des Behälters 1 ebenfalls zu Helligkeitsabweichungen führen.

Aufgabe und Ziel der vorliegenden Erfindung ist es, einen Vorrichtung zur Inspektion von Behältern vorzustellen, welche die oben dargestellten Nachteile der bekannten Inspektionsvorrichtungen sicher vermeidet. Dazu sieht die Erfindung die Ausbildung einer Inspektionsvorrichtung entsprechend des kennzeichnenden Teils des Anspruches 1 vor. Weiterbildungen sind Bestandteil der Unteransprüche.

Im Nachfolgenden wird die vorliegende Erfindung anhand eines Ausführungsbeispieles näher erläutert.

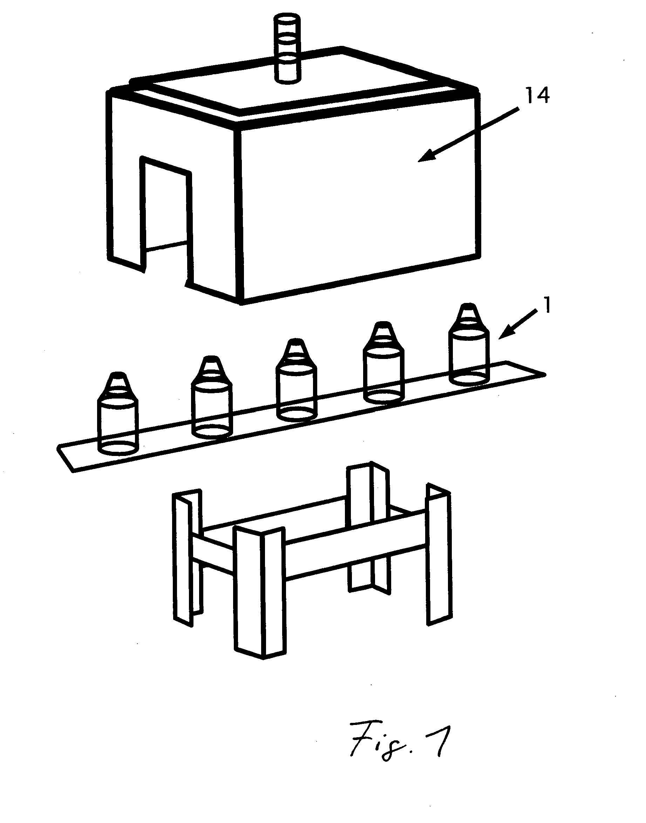

Im Einzelnen zeigt die
- Figur 1: in einer vereinfachten Darstellung eine Inspektionsmaschine in Linearbauweise, wobei die Einhausung in einer erhöhten Position dargestellt wurde, und die

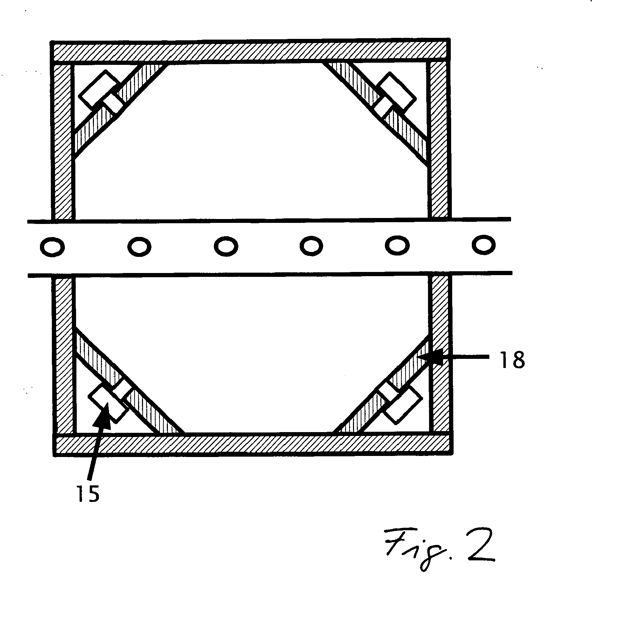

- Figur 2: in einer vereinfachten Schnittdarstellung eine Draufsicht, und die

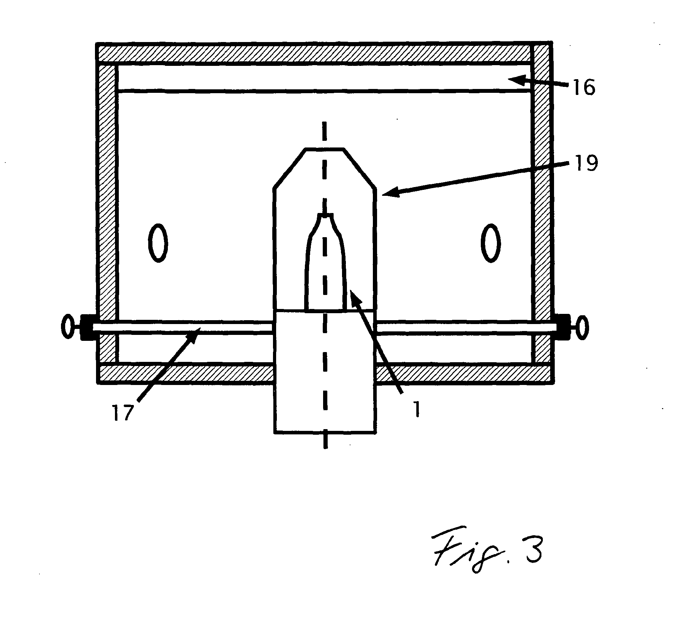

- Figur 3: in einer ebenfalls vereinfachten Schnittdarstellung eine Seitenansicht einer Inspektionsmaschine in Linearbauweise.

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung. Gleichzeitig wird der Inhalt der Ansprüche zu einem Bestandteil der Beschreibung gemacht.

In der Praxis wurde gefunden, dass die Oberfläche eines fehlerfreien Behälters 1 dann die gleichmäßigsten Helligkeitswerte aufweist, wenn die Leuchtdichte in der, den Behälter umgebenden Einhausung 14 möglichst homogen ist. Unter dem Begriff "homogener Leuchtdichte" ist in diesem Zusammenhang zu verstehen, dass von jedem beliebigen Punkt innerhalb der Einhausung aus betrachtet, in jede beliebige Blick- oder Messrichtung die selbe Beleuchtungsstärke oder Helligkeit wahrnehmbar oder messbar ist.

Zur Erzielung einer möglichst homogenen Leuchtdichte sieht die vorliegende Erfindung vor, die Innenwände der umgebenden Einhausung hell, vorzugsweise weiß auszubilden. Ebenfalls ist vorgesehen, die Innenwände derart auszubilden, dass diese das auf sie treffende Licht möglichst vollständig und möglichst diffus, ungerichtet und gleichmäßig reflektieren bzw. abstrahlen.

Versuche zeigten, dass dann eine besonders vorteilhafte Abbildung des Behälters gegeben ist, wenn die, für eine gleichmäßige Beleuchtung relevanten Parameter der Innenwände , nämlich Reflektions- und Diffusionsvermögen optimal aufeinander abgestimmt sind.

Das Diffusionsvermögen einer Fläche wird bestimmt durch die Parameter Streuvermögen Sigma und Halbwertswinkel, wobei ein Streuvermögen Sigma von größer 0,4 und ein Halbwertswinkel von größer als 27 Grad, gemessen zur Senkrechten auf die Fläche, als besonders vorteilhaft ermittelt wurden.

Für das Reflektionsvermögen wurde gefunden, dass ein Wert größer 65% besonders vorteilhaft ist.

Um die oben genannten Vorgaben für die Parameter sicher erreichen zu können, ist es erforderlich, die Innenwände der Einhausung mit einem geeigneten Material zu beschichten.
Bei diesem Material kann es sich z.B. um eine Farbe oder eine sonstige Beschichtung handeln, welche Pigmente aus den Oxiden eines Metalls, z.B. Titan enthält.

Bei den Oxiden kann es ich um sowohl um ein Monoxid, als auch um ein Dioxid usw. handeln.

Zur Verbesserung der Haltbarkeit der oben genannten Beschichtung ist vorgesehen, diese durch Einbrennen, bzw. Emaillieren mit den Innenwänden zu verbinden.

Unter dem Begriff "Innenwänden" sind im Zusammenhang mit der vorliegenden Anmeldung alle Flächen zu verstehen, die sich innerhalb der Einhausung befinden. Dazu zählen neben den Seitenflächen, dem Boden und der Decke ebenfalls auch die Oberflächen des Behältertransporteurs. Dabei insbesondere auch die Oberfläche der Transportkette.

Bezüglich alle Innenwände und den diesen zugeordneten Flächen, z.B. der Transportkette sieht die Erfindung vor, auch deren Oberfläche auf geeignete Weise zu Beschichten, um die gewünschten Eigenschaften zu erzielen.

Während des Betriebes von Inspektionsvorrichtungen kommt es mit einer gewissen Häufigkeit z.B. durch platzende oder umfallende Behälter zu Verschmutzungen. Fallen diese Verschmutzungen innerhalb der Einhausung an, so verfälschen diese das Inspektionsergebnis in unerwünschter Weise, so dass die Verschmutzung umgehend beseitigt werden muss. Diesbezüglich sieht die vorliegende Erfindung vor, den Boden der Einhausung 14 zumindest teilweise schubladen- 17 oder klappenförmig auszubilden, so dass Verschmutzungen schnell und ohne langandauernden Maschinenstillstand beseitigt werden können.

Da Praxisversuche ebenfalls gezeigt haben, dass die Oberflächen der üblicher Weise verwendeten Kameras weder die erforderlichen Eigenschaften hinsichtlich Reflektion und Diffusion oder Streuung aufweisen, noch so behandelt werden können, dass die gewünschten Eigenschaften erreicht werden können, sieht die vorliegende Erfindung im Rahmen einer weiteren Ausbildung vor, die mindestens eine Kamera 15 innerhalb der Einhausung hinter einer Scheibe 18 oder einem anderen geeigneten Element anzuordnen. Dabei erfolgt diese Anordnung derart, dass die Scheibe bis auf eine, der Eintrittsöffnung des Kameraobjektivs angepassten Stelle vollflächig entsprechenden der obigen Ausführungen behandelt ist, und dass die Kamera bis auf die Eintrittsöffnung vollständig hinter der Scheibe verborgen ist, wodurch die homogene Leuchtdichte im inneren der Einhausung geringst möglich beeinflusst oder gestört wird.

Da die zur Inspektion eines Behälters zur Verfügung stehende Zeit insbesondere bei Hochleistungsinspektionsmaschinen mit Leistungen von mehr als 50000 Behältern pro Stunde klein ist, und zeitaufwändige Rechenoperationen zur Eliminierung von optischen Abbildungsfehlern oder Verzerrungen möglichst vermieden werden müssen, sieht die Erfindung zur weiteren Verbesserung der Anwendbarkeit der vorliegenden Erfindung vor, dass dann, wenn mehr als eine Kamera verwendet wird, diese Kameras derart angeordnet sind, dass diese zum Zeitpunkt der Aufnahme des Behälters 1 den selben Abstand von diesem aufweisen. Dabei kann die Anordnung der Kameras 15 z.B. an den Eckpunkten eines Quadrates oder aber auch auf einer Kreislinie erfolgen, wobei sich bei beiden (Quadrat und Kreislinie) der Behälter zum Zeitpunkt der Aufnahme genau in deren Mittelpunkt befindet.

## Patentansprüche

1. Inspektionsvorrichtung für die Inspektion von verschlossenen Behältern wie Flaschen, Gläsern oder dergleichen, ausgebildet in Linear- oder Rundläuferbauweise, mit mindestens einer Kamera (15), mindestens einer Beleuchtungsvorrichtung (16) und mindestens einem System zur Bildverarbeitung, mit einer Einhausung (14), welche zumindest einen Teil der Behältertransportstrecke, die mindestens eine Beleuchtungsvorrichtung (16), die mindestens eine Kamera (15) umschließt, **dadurch gekennzeichnet, dass** die Innenflächen der Einhausung (14) hell ausgebildet sind.

2. Inspektionsvorrichtung nach Anspruch 1, **dadurch gekennzeichnet, dass** die Innenflächen der Einhausung matt ausgebildet sind.

3. Inspektionsvorrichtung nach Anspruch 1 oder 2, **dadurch gekennzeichnet, dass** die Innenflächen der Einhausung (14) derart ausgebildet sind, dass das Licht diffus reflektiert wird.

4. Inspektionsvorrichtung nach einem der vorhergehenden Ansprüche, **dadurch gekennzeichnet, dass** die Innenflächen der Einhausung (14) ein Streuvermögen von mindestens 0,4 aufweisen.

5. Inspektionsvorrichtung nach einem der vorhergehenden Ansprüche, **dadurch gekennzeichnet, dass** die Innenflächen der Einhausung (14) einen, gegen die Senkrechte der Fläche gemessenen Halbwertswinkel von mindestens 27 Grad aufweisen.

6. Inspektionsvorrichtung nach einem der vorhergehenden Ansprüche, **dadurch gekennzeichnet, dass** die Innenflächen der Einhausung (14) ein Reflektionsvermögen von mindestens 65% aufweisen.

7. Inspektionsvorrichtung nach einem der vorhergehenden Ansprüche, **dadurch gekennzeichnet, dass** die mindestens eine Kamera (15) innerhalb der Einhausung (14) angeordnet ist, wobei die Kamera bis auf die Eintrittsöffnung ihres Objektivs verborgen angeordnet ist.

8. Inspektionsvorrichtung nach einem der vorhergehenden Ansprüche, **dadurch gekennzeichnet, dass** alle Kameras (15) zum Zeitpunkt der Aufnahme des Behälters (1) den selben Abstand von diesem haben.

9. Inspektionsvorrichtung nach einem der vorhergehenden Ansprüche, **dadurch gekennzeichnet, dass** die Bodenfläche der Einhausung zumindest teilweise schubladenförmig (17) und/oder klappenförmig ausgebildet ist.

10. Inspektionsvorrichtung nach einem der vorhergehenden Ansprüche, **dadurch gekennzeichnet, dass** die Beschichtung der Innenflächen der Einhausung (14) mindest ein Metalloxid enthält.

11. Inspektionsvorrichtung nach einem der vorhergehenden Ansprüche, **dadurch gekennzeichnet, dass** die Beschichtung der Innenflächen der Einhausung (14) in diese eingebrannt oder auf diese emailliert ist.
